# EUROPÄISCHE PATENTSCHRIFT

(11) **EP 2 586 553 B1**
(45) Veröffentlichungstag und Bekanntmachung des Hinweises auf die Patenterteilung: **02.08.2017**
(21) Anmeldenummer: 12007152.7
(22) Anmeldetag: 16.10.2012
(51) Int. Cl.: B23D 3/02, B28D 1/18, B23C 3/30

(54) **Vorrichtung und Verfahren zum Herstellen einer Nut in Werkstücken**
Device and method for producing a groove in workpieces
Dispositif et procédé destinés à fabriquer une encoche dans des pièces usinées

(30) Priorität: 27.10.2011 DE 102011117257
(43) Veröffentlichungstag der Anmeldung: 01.05.2013
(73) Patentinhaber: Heinrich Kuper GmbH & Co. KG, 33397 Rietberg (DE)
(72) Erfinder: Manca, Fabio, 33397 Rietberg (DE); Marré, Michael, 33330 Gütersloh (DE); von Mutius, Michael, 33397 Rietberg (DE)
(74) Vertreter: Hoefer & Partner Patentanwälte mbB

(56) Entgegenhaltungen:
- EP-A1- 0 082 911
- DE-A1- 19 905 414
- FR-A1- 2 571 290
- GB-A- 1 282 198
- US-A- 2 968 326

## Beschreibung

Die vorliegende Erfindung betrifft eine Vorrichtung und ein Verfahren zur Herstellung einer Nut in Werkstücken, insbesondere Acryl-Werkstücken, wie beispielsweise Acryl-Glasplatten oder anderen plattenartigen Kunststoffen.

Werkzeugmaschinen sind aus dem Stand der Technik in unterschiedlichen Ausgestaltungen bekannt. Insbesondere bei durchsichtigen Acryl-Glasplatten muss eine Bearbeitung mit höchster Sorgfalt erfolgen, da aufgrund der Transparenz der Acryl-Glasplatten kleinste Unregelmäßigkeiten sofort auffallen. Hierbei muss sowohl die Bearbeitung von Kanten der Acryl-Glasplatten als auch die Herstellung von Nuten in den Acryl-Glasplatten mit höchster Sorgfalt erfolgen. Aus Acryl-Glasplatten können beispielsweise rechteckige Boxen oder dgl. hergestellt werden, wobei in den Acryl-Glasplatten eine V-förmige Nut vorgesehen werden muss, und die Nut als Schwenkachse zum Umklappen der beiden Plattenteile dient. Damit die Platte klappbar ist, darf nur ein definierter Materialrest im Bereich der Nut verbleiben. Bisher werden derartige Nuten mittels Tischkreissägen hergestellt, bei denen das Sägeblatt aus einer Tischebene vorsteht und die Nut durch Bewegen des Werkstücks über das Sägeblatt an der Unterseite des Werkstücks hergestellt wird. Hierbei ist jedoch ein Problem, dass aufgrund von Herstellungstoleranzen häufig unterschiedlich dicke Platten zur Verarbeitung kommen. Wenn die verbleibende Materialstärke an der Nut jedoch von der definierten Dicke auch nur um einige Mikrometer abweicht, kann es beim Faltvorgang zu unerwünschten Beschädigungen und sichtbaren Unregelmäßigkeiten, insbesondere milchig erscheinenden Stellen, im Bereich der Nut kommen.

Die EP 0 082 911 A1 offenbart eine Vorrichtung, gemäß dem Oberbegriff des Anspruchs 1, zur Herstellung einer V-förmigen Nut in einem plattenförmigen Werkstück, mit einer Tischplatte und einem rotierenden, V-förmigen Werkzeug, welches rotierende einzelne Klingen umfasst. Eine Vorschubeinrichtung ist durch zwei über Riemen angetriebene Wellen vorgesehen und oberhalb des Tisches angeordnet. Ferner sind zwei Führungsstangen vorgesehen, welche parallel angeordnet sind.

Die GB 1 282 198 A offenbart eine Maschine zur Herstellung von V-förmigen Nuten an einer Oberseite eines Werkstücks. Zum Transport des Werkstücks werden zwei Rollen verwendet, welche mittels eines Riementriebs angetrieben sind. Die Rollen befinden sich in Kontakt mit dem Werkstück und sind parallel zur Vorschubrichtung angeordnet.

Weiterhin betrifft die US 2 968 326 A ebenfalls eine Maschine zur Herstellung von Nuten, bei der die Fräser oberhalb des Werkstücks angeordnet sind. Hier werden ebenfalls V-förmige Nuten erzeugt. Zum Vorschub des plattenförmigen Werkstücks sind Führungsrollen vorgesehen.

Es ist daher Aufgabe der vorliegenden Erfindung, eine Vorrichtung und ein Verfahren bereitzustellen, welche bei einfachem Aufbau und einfacher, kostengünstiger Durchführbarkeit eine exakte, definierte Materialstärke bei der Herstellung einer Nut in einem plattenförmigen Werkstück sicherstellt, um ein problemloses Umklappen des Werkstücks an der Nut zu ermöglichen.

Diese Aufgabe wird durch eine Vorrichtung mit den Merkmalen des Anspruchs 1 und ein Verfahren mit den Merkmalen des Anspruchs 5 gelöst. Die Unteransprüche zeigen jeweils bevorzugte Weiterbildungen der Erfindung.

Die erfindungsgemäße Vorrichtung zum Herstellen einer Nut in einem Werkstück, insbesondere einem plattenförmigen Acryl-Kunststoff, hat den Vorteil, dass immer eine definierte Restmaterialstärke im Bereich zwischen einem Boden der Nut und einer Rückseite des Werkstücks vorhanden ist. Hierdurch kann insbesondere bei Verwendung von Acryl-Glasplatten ein problemloses Umklappen von zwei noch über die Restmaterialstärke im Bereich der Nut miteinander verbundenen Teilen des Werkstücks ermöglicht werden. Aufgrund der definierten Restmaterialstärke kommt es dabei nicht zu unerwünschten Verformungen oder anderen sichtbaren Unregelmäßigkeiten des Werkstücks. Dies wird erfindungsgemäß dadurch erreicht, dass die Vorrichtung eine Tischplatte aufweist, auf welcher das zu bearbeitende plattenförmige Werkstück aufliegt und ein rotierendes Werkzeug über der Tischplatte angeordnet ist. Hierdurch ist eine Bearbeitung des Werkstücks von oben möglich, so dass gegebenenfalls vorhandene Abweichungen einer Materialdicke bei der Herstellung einer Nut unbeachtlich sind, da die definierte Restmaterialstärke durch eine definierte Positionierung des Werkzeugs über der Tischplatte leicht und reproduzierbar einstellbar ist. Die Vorrichtung umfasst ferner eine Vorschubeinrichtung, welche ebenfalls über der Tischplatte angeordnet ist und das Werkstück während des Bearbeitungsvorgangs bewegt. Die Vorschubeinrichtung umfasst ferner einen umlaufenden Riemen. Hierdurch kann ein sicheres und einfaches Bewegen des Werkstücks erfolgen, da durch die Verwendung des Riemens eine lange Kontaktzone zwischen Riemen und Werkstück möglich ist. Um ein besonders sicheres Bewegen des Werkstücks zu ermöglichen, ist die Vorschubeinrichtung in einem Winkel zu einer Werkzeugebene angeordnet. Der Winkel ist bevorzugt relativ klein, insbesondere in einem Bereich von 0,5 bis 2 Grad gewählt und beträgt vorzugsweise 1 Grad. Durch das Vorsehen der Vorschubeinrichtung in einem Winkel zur Werkzeugebene kann insbesondere auch ein sicheres Anlegen des Werkstücks an einem Anschlag, wie beispielsweise einer Leiste oder dgl., erfolgen. Um in einem Schritt eine V-förmige Nut herzustellen, wird als Werkzeug ein Fräser mit zwei in einem Winkel zueinander angeordneten Fräsflächen verwendet, wobei die beiden Fräsflächen vorzugsweise in einem Winkel von 90 Grad zueinander angeordnet sind, um eine 90 Grad-V-Nut herzustellen.

Um eine möglichst optisch fehlerfreie Oberfläche im Bereich der Nut zu erhalten, rotiert das Werkzeug gegenläufig zu einer Vorschubrichtung des Werkstücks. Das Werkzeug ist ferner bevorzugt derart gewählt, dass es eine möglichst glatte Schnittfläche erzeugt und weist bevorzugt diamantbesetzte Schneiden auf.

Weiter bevorzugt sind die Vorschubeinrichtung und der Antrieb mit dem rotierenden Werkzeug in einem mit Schlitzen versehenen Gehäuse angeordnet. Durch die Schlitze sind Verstellelemente, insbesondere Hebel, hindurchgeführt, um eine vertikale Position des Werkzeugs gegenüber der Tischplattenebene zu verstellen.

Gemäß dem erfindungsgemäßen Verfahren zur Herstellung einer Nut in einem Werkstück wird zuerst das Werkstück auf einer Tischplatte positioniert und anschließend die Nut an einer Oberseite des Werkstücks, welche nicht auf der Tischplatte aufliegt, mittels eines rotierenden Werkzeugs hergestellt. Da das Werkzeug gegenüber der Tischplatte in einer definierten vertikalen Position angeordnet ist, kann auch bei unterschiedlich dicken Werkstücken immer eine definierte Restmaterialstärke zwischen einem Boden der Nut und einer Unterseite des Werkstücks verbleiben.

Nachfolgend werden unter Bezugnahme auf die begleitende Zeichnung eine Vorrichtung und ein Verfahren zur Herstellung einer Nut in einem Werkstück im Detail beschrieben. In der Zeichnung ist:
- Fig. 1: eine schematische, perspektivische Ansicht einer Vorrichtung gemäß einem Ausführungsbeispiel der Erfindung,
- Fig. 2: eine perspektivische Ansicht der Vorrichtung entsprechend Fig. 1 mit teilweise entferntem Gehäuse,
- Fig. 3: eine schematische Seitenansicht der Vorrichtung,
- Fig. 4: eine schematische Draufsicht der Vorrichtung,
- Fig. 5: eine schematische Frontansicht der Vorrichtung,
- Fig. 6: eine perspektivische Detaildarstellung der Vorrichtung, und
- Fig. 7: eine schematische Seitenansicht der Vorrichtung mit erzeugter Nut.

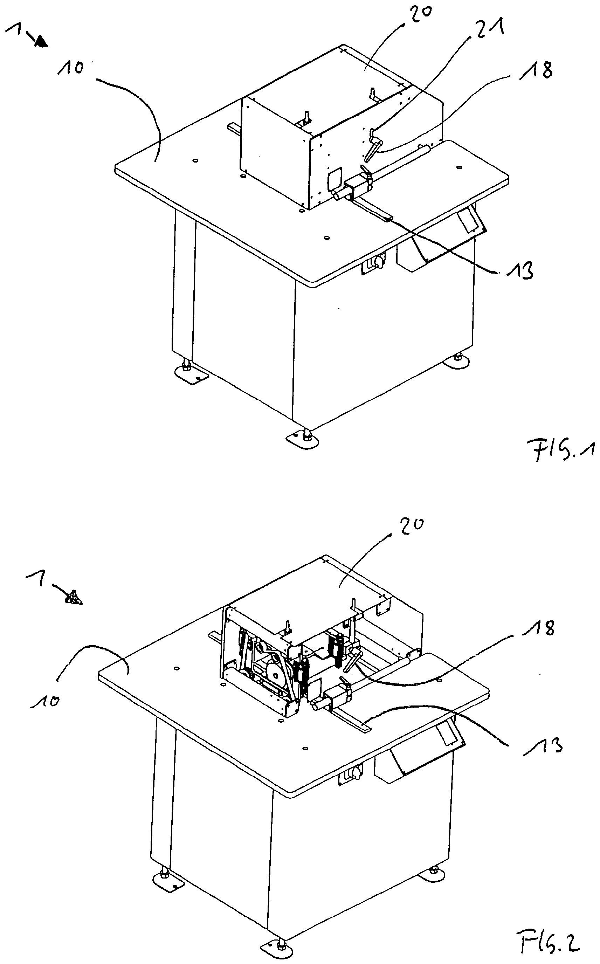

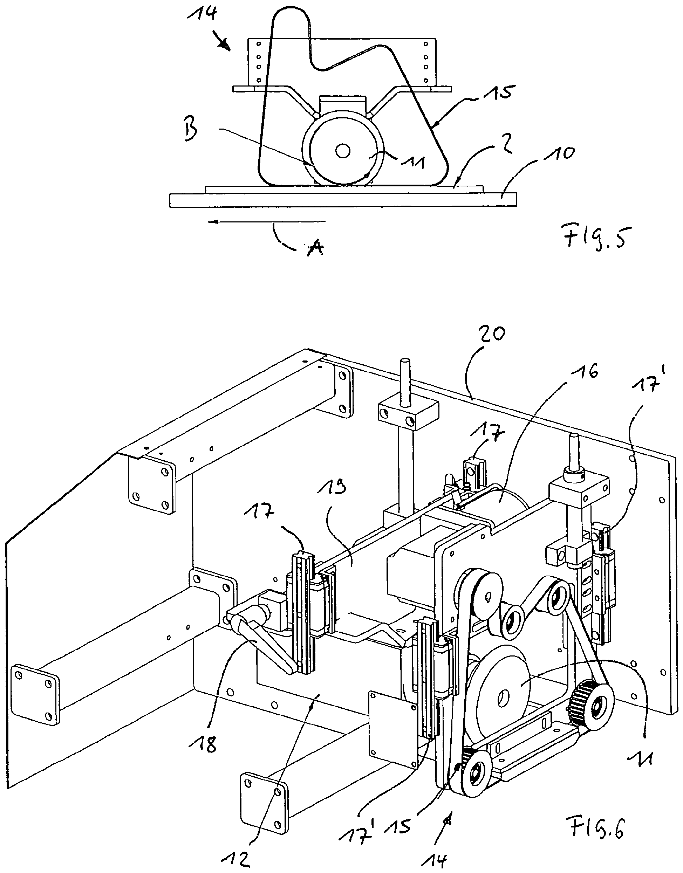

Wie in den Fig. 1 bis 7 dargestellt, umfasst die erfindungsgemäße Vorrichtung 1 zum Herstellen einer Nut 3 in einem Werkstück 2 eine Tischplatte 10, ein rotierendes Werkzeug 11 und eine Vorschubeinrichtung 14. Das rotierende Werkzeug 11 wird von einem Antrieb 12 in einer Rotationsrichtung B (vgl. Fig. 5) angetrieben. Die Vorschubeinrichtung 14 umfasst einen geschlossenen, umlaufenden Riemen 15 und eine Vielzahl von Umlenkrollen einschl. einer Spannrolle. Die Vorschubeinrichtung 14 wird mittels eines Antriebs 16 angetrieben. Wie aus den Figuren ersichtlich ist, sind sowohl das Werkzeug 11 als auch die Vorschubeinrichtung 14 über der Tischplatte 10 angeordnet.

Ferner, wie aus den Fig. 1 und 2 ersichtlich ist, ist auf der Tischplatte 10 ein Anschlag 13 in Form einer länglichen Leiste vorgesehen. Das Werkzeug und die Vorschubeinrichtung 14 nebst den zugehörigen Antrieben, sind, wie aus den Fig. 1 und 2 ersichtlich ist, in einem Gehäuse 20 angeordnet. Im Gehäuse 20 sind mehrere Schlitze 21 vorgesehen, um eine vertikale Verstellung des Werkzeugs 11 mitsamt dem Antrieb 12 zu ermöglichen. Hierzu sind zwei Linearführungen 17 vorgesehen, wobei eine Halteplatte 19 mittels Hebel 18 von den Linearführungen 17 gelöst werden kann und nach dem Verschieben in eine gewünschte Position wieder fixiert werden kann. Hierdurch kann ein Abstand des Werkzeugs 11 von der Tischplatte 10 eingestellt werden. In ähnlicher Weise kann auch die Vorschubeinrichtung 14 an Linearführungen 17' vertikal verschoben werden.

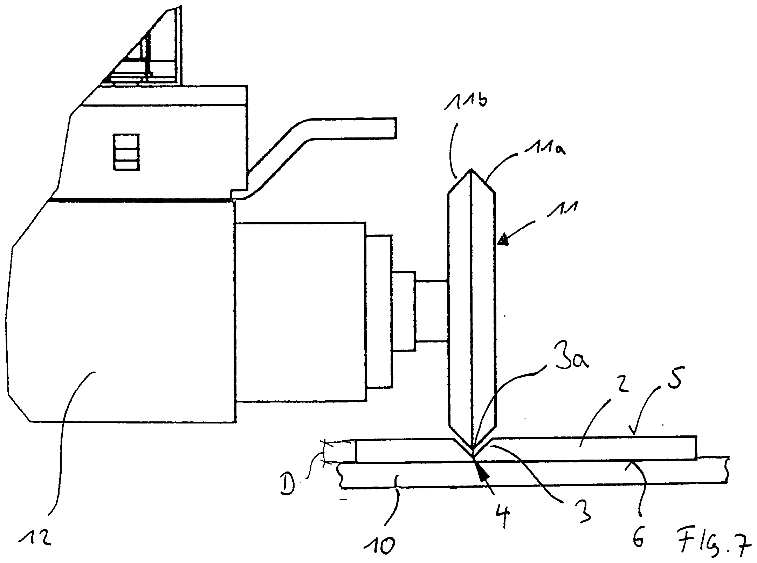

Wie aus Fig. 5 ersichtlich ist, ist eine Vorschubrichtung A, welche durch die Vorschubeinrichtung 14 auf das Werkstück 2 ausgeübt wird, entgegengesetzt zur Rotationsrichtung B des Werkzeugs 11 im Eingriffsbereich des Werkzeugs. Das Werkstück 2 dieses Ausführungsbeispiels ist eine durchsichtige Acrylplatte, in welche eine V-förmige Nut 3 eingebracht werden soll. Wie insbesondere aus Figur 7 ersichtlich ist, soll hierbei die V-förmige Nut 3 eine Tiefe derart aufweisen, dass eine Restmaterialstärke 4 von einem Boden 3a der Nut 3 bis zu einer Unterseite 6 des Werkstücks, mit welcher das Werkstück auf der Tischplatte 10 aufliegt, aufrechterhalten werden. Diese definierte Restmaterialstärke 4 ermöglicht es, dass durch die Nut 3 in zwei Plattenteile unterteilte Werkstücke 2 durch Klappen eines der Plattenteile um 90 Grad entlang der Nut 3 zu einem Teil eines rechteckigen Behältnisses oder dgl. verwendet werden kann. Dabei muss die Restmaterialstärke 4 in jedem Fall das definierte Maß aufweisen, um einerseits ein leichtes und beschädigungsfreies Klappen der Plattenteile zu ermöglichen, und andererseits keine unerwünschten Verfärbungen bzw. kein unerwünschtes Reißen des Werkstücks im Bereich der Nut aufzuweisen.

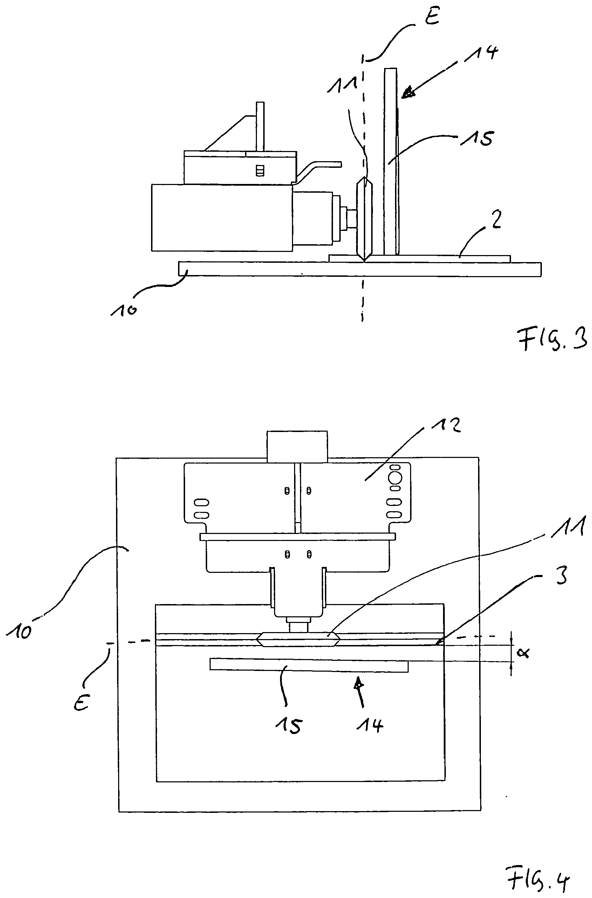

Da erfindungsgemäß die Unterseite 6 des Werkstücks 2 direkt auf der Tischplatte 10 aufliegt und das Werkzeug 11, welches im Schnitt ebenfalls eine V-Form mit einer ersten Fräserfläche 11 a und einer zweiten Fräserfläche 11 b aufweist, von oben in das Werkstück 2 eingreift, kann aufgrund des definierten Abstandes des Werkzeugs 11 von der Tischplatte 10 immer die eingestellte, definierte Restmaterialstärke 4 erhalten werden, unabhängig davon, ob das Werkstück im gewissen Toleranzbereichen unterschiedliche Dicken D aufweist. Ferner ist die Vorschubeinrichtung 14 gegenüber einer Ebene E, welche senkrecht zur Tischplatte 10 verläuft und in welcher das Werkzeug 11 angeordnet ist, um einen Winkel α von einem Grad schräggestellt (vgl. Fig. 3 und 4). Hierdurch wird während des Bearbeitungsvorgangs das Werkstück durch die Vorschubeinheit 14 auch leicht gegen den Anschlag 13 und damit in Richtung des Werkzeugs 11 gedrückt. Da ferner die Vorschubeinrichtung 14 das Werkstück 2 mit einer konstanten Geschwindigkeit transportiert, ergibt sich in Verbindung mit der gegenläufigen Schneidrichtung des Werkzeugs 11 ein gleichmäßiges Fräsbild. Hierdurch können die bei Acryl-Kunststoffen notwendigen höchsten Qualitätsanforderungen aufrechterhalten werden.

### Bezugszeichenliste

- 1: Vorrichtung
- 2: Werkstück
- 3: Nut
- 3a: Boden der Nut
- 4: definierte Materialstärke
- 5: Oberseite
- 6: Unterseite
- 10: Tischplatte
- 11: rotierendes Werkzeug
- 11a, 11b: erste und zweite Fräserflächen
- 12: Antrieb
- 13: Anschlag
- 14: Vorschubeinrichtung
- 15: umlaufender Riemen
- 16: Antrieb
- 17, 17': Linearführungen
- 18: Verstellelement
- 19: Halteplatte
- 20: Gehäuse
- 21: Schlitz
- α: Winkel
- A: Vorschubrichtung
- B: Rotationsrichtung
- E: Werkzeugebene

## Patentansprüche

1. Vorrichtung zur Herstellung einer Nut (3) in einem plattenförmigen Werkstück (2) aus Acryl-Kunststoff umfassend:
- eine Tischplatte (10), auf welcher das Werkstück (2) aufliegt,
- ein rotierendes Werkzeug (11),
- einen Antrieb (12) zum Antreiben des Werkzeugs, und
- eine Vorschubeinrichtung (14), um das Werkstück in einer Vorschubrichtung (A) zu bewegen,
- wobei das Werkzeug (11) und die Vorschubeinrichtung (14) über der Tischplatte (10) angeordnet sind, und
- wobei die Vorrichtung zur Einbringung der Nut (3) in einer Oberseite (5) des Werkstücks (2) derart ausgebildet ist, dass eine definierte Materialstärke (4) am Werkstück zwischen einem Boden (3a) der Nut (3) und einer Unterseite (6) des Werkstücks vorhanden ist,
- wobei das Werkzeug (11) ein Fräser mit einer ersten und einer zweiten Fräserfläche (11 a, 11b) ist, wobei die Fräserflächen (11 a, 11b) in einem Winkel zueinander angeordnet sind, um eine V-förmige Nut (3) im Werkstück zu erzeugen,
**dadurch gekennzeichnet,**
- **dass** die Vorschubeinrichtung (14) einen das Werkstück (2) kontaktierenden umlaufenden Riemen (15) umfasst,
- **dass** die Vorschubeinrichtung (14) zu einer Ebene (E), welche senkrecht zur Tischplatte (10) ist und in welcher das Werkzeug (11) angeordnet ist, in einem Winkel (α) ist.

2. Vorrichtung nach Anspruch 1, **dadurch gekennzeichnet, dass** das Werkzeug mit einer Rotationsrichtung (B) gegenläufig zur Vorschubrichtung (A) rotiert.

3. Vorrichtung nach einem der vorhergehenden Ansprüche, **dadurch gekennzeichnet, dass** der Antrieb (12) des Werkzeugs und das Werkzeug (11) eine Baugruppe bilden, welche vertikal, insbesondere mittels Linearführungen (17), verstellbar ist.

4. Vorrichtung nach einem der vorhergehenden Ansprüche, **dadurch gekennzeichnet, dass** die Vorschubeinrichtung (14) und der Antrieb (12) mit dem Werkzeug (11) in einem Schlitze (21) aufweisenden Gehäuse (20) angeordnet sind und eine Verstellung einer Vertikalposition des Werkzeugs (11) über der Tischplatte (10) mittels durch die Schlitze (21) geführten Verstellelementen (18), insbesondere Spannhebeln, möglich ist.

5. Verfahren zur Herstellung einer Nut (3) in einem plattenförmigen Acryl-Kunststoff-Werkstück umfassend die Schritte:
- Positionieren des Werkstücks (2) auf einer Tischplatte (10), und
- Herstellen der Nut (3) an einer Oberseite (5) des Werkstücks (2) mittels eines rotierenden Werkzeugs (11), wobei das Werkstück (2) mittels eines umlaufenden Riemens (15), welcher Teil einer Vorschubeinrichtung (14) ist, transportiert wird und das Werkzeug (11) sowie die Vorschubeinrichtung (14) über dem Werkstück (2) angeordnet sind, und
- wobei die Nut (3) derart hergestellt wird, dass eine definierte Materialstärke (4) zwischen einem Boden (3a) der Nut (3) und einer Unterseite (6) des Werkstücks verbleibt,
- wobei die verbleibende Materialstärke (4) zwischen dem Boden der Nut (3) und der Unterseite (6) des Werkstücks derart gewählt ist, dass das Werkstück (2) an der Nut (3) klappbar ist, und
- wobei die Vorschubeinrichtung (14) zu einer Ebene (E), welche senkrecht zur Tischplatte (10) ist und in welcher das Werkzeug (11) angeordnet ist, in einem Winkel (α) angeordnet ist, um eine Andrückkraft gegen einen Anschlag (13) bereitzustellen.

6. Verfahren nach Anspruch 5, **dadurch gekennzeichnet, dass** eine Vorschubrichtung (A) und eine Rotationsrichtung des Werkzeugs (11) gegenläufig sind.

## Claims

1. Device for producing a groove (3) in a plate-shaped workpiece (2) that is embodied from acrylic synthetic material, said device comprising:
- a table plate (10) on which the workpiece (2) lies
- a rotating tool (11),
- a drive system (12) for driving the workpiece, and
- a feeding device (14) in order to move the workpiece in a feeding direction (A),
- wherein the tool (11) and the feeding device (14) are arranged above the table plate (10), and
- wherein the device for introducing the groove (3) is arranged in an upper face (5) of the workpiece (2) in such a manner that a defined material thickness (4) is present on the workpiece between a base (3a) of the groove (3) and a lower face (6) of the workpiece,
- wherein the tool (11) is a milling tool having a first milling surface (11 a) and a second milling surface (11b), wherein the milling surfaces (11a, 11b) are arranged at an angle with respect to one another in order to produce a V-shaped groove (3) in the workpiece,
**characterized in that**
- the feeding device (14) comprises a rotating belt (15) that contacts the workpiece (2),
- the feeding device (14) is at an angle (α) with respect to a plane (E) that is perpendicular to the table plate (10) and in which the tool (11) is arranged.

2. Device according to claim 1, **characterized in that** the tool rotates in a direction of rotation (B) that is opposite to the feeding direction (A).

3. Device according to any one of the preceding claims, **characterized in that** the drive system (12) of the tool and the tool (11) form an assembly that can be adjusted vertically, in particular by means of linear guiding arrangements (17).

4. Device according to any one of the preceding claims, **characterized in that** the feeding device (14) and the drive system (12) are arranged with the tool (11) in a housing (20) that comprises a slot (21) and it is possible to adjust a vertical position of the tool (11) above the table plate (10) by means of adjusting elements (18), in particular clamping levers, that are guided through the slots (21).

5. Method for producing a groove (3) in a plate-shaped acrylic synthetic material workpiece, said method comprising the steps:
- positioning the workpiece (2) on a table plate (10), and
- producing the groove (3) on an upper face (5) of the workpiece (2) by means of a rotating tool (11), wherein the workpiece (2) is transported by means of a rotating belt (15) that is part of a feeding device (14), and the tool (11) and also the feeding device (14) are arranged above the workpiece (2), and
- wherein the groove (3) is produced in such a manner that a defined material thickness (4) remains between a base (3a) of the groove (3) and a lower face (6) of the workpiece,
- wherein the remaining material thickness (4) between the base of the groove (3) and the lower face (6) of the workpiece is selected in such a manner that the workpiece (2) can be folded on the groove (3), and
- wherein the feeding device (14) is arranged at an angle (α) with respect to a plane (E) that is perpendicular to the table plate (10) and in which the tool (11) is arranged in order to provide a pressing force against a stop (13).

6. Method according to Claim 5, **characterized in that** a feeding direction (A) and a direction of rotation of the tool (11) are opposite to one another.

## Revendications

1. Dispositif destiné à fabriquer une encoche (3) dans une pièce usinée (2) en forme de plaque en plastique acrylique comprenant :
- un panneau de table (10), sur lequel repose la pièce usinée (2),
- un outil (11) rotatif,
- un entraînement (12) pour l'entraînement de l'outil, et
- un équipement d'avance (14) pour déplacer la pièce usinée dans un sens d'avance (A),
- dans lequel l'outil (11) et l'équipement d'avance (14) sont agencés au-dessus du panneau de table (10), et
- dans lequel le dispositif d'insertion de l'encoche (3) est réalisé dans un côté supérieur (5) de la pièce usinée (2) de telle manière qu'une épaisseur de matière (4) définie est présente au niveau de la pièce usinée entre un fond (3a) de l'encoche (3) et un côté inférieur (6) de la pièce usinée,
dans lequel l'outil (11) est une fraiseuse avec une première et une deuxième surface de fraiseuse (11 a, 11b), dans lequel les surfaces de fraiseuse (11 a, 11b) sont agencées l'une par rapport à l'autre en formant un angle pour produire une encoche (3) en forme de V dans la pièce usinée,
**caractérisé en ce**
- **que** l'équipement d'avance (14) comprend une courroie (15) rotative en contact avec la pièce usinée (2),
- **que** l'équipement d'avance (14) forme un angle (□) par rapport à un plan (E), qui est perpendiculaire au panneau de table (10) et dans lequel l'outil (11) est agencé.

2. Dispositif selon la revendication 1, **caractérisé en ce que** l'outil tourne avec un sens de rotation (B) opposé au sens d'avance (A).

3. Dispositif selon l'une quelconque des revendications précédentes, **caractérisé en ce que** l'entraînement (12) de l'outil et l'outil (11) forment un module, qui est déplaçable verticalement, en particulier au moyen de guides linéaires (17).

4. Dispositif selon l'une quelconque des revendications précédentes, **caractérisé en ce que** le dispositif d'avance (14) et l'entraînement (12) sont agencés avec l'outil (11) dans un carter (20) présentant des fentes (21) et un déplacement d'une position verticale de l'outil (11) au-dessus du panneau de table (10) est possible au moyen d'éléments de réglage (18) guidés à travers les fentes (21), en particulier des leviers de serrage.

5. Procédé destiné à fabriquer une encoche (3) dans une pièce usinée en plastique acrylique en forme de plaque comprenant les étapes de :
- positionnement de la pièce usinée (2) sur le panneau de table (10), et
- fabrication de l'encoche (3) au niveau d'un côté supérieur (5) de la pièce usinée (2) au moyen d'un outil (11) rotatif, dans lequel la pièce usinée (2) est transportée au moyen d'une courroie (15) rotative, laquelle fait partie d'un équipement d'avance (14), et l'outil (11) ainsi que l'équipement d'avance (14) sont agencés au-dessus de la pièce usinée (2), et
- dans lequel l'encoche (3) est fabriquée de telle manière qu'il reste une épaisseur de matière (4) définie entre un fond (3a) de l'encoche (3) et un côté inférieur (6) de la pièce usinée,
- dans lequel l'épaisseur de matière (4) restante entre le fond de l'encoche (3) et le côté inférieur (6) de la pièce usinée est sélectionnée de telle manière que la pièce usinée (2) est pliable au niveau de l'encoche (3), et
- dans lequel l'équipement d'avance (14) est agencé avec un angle (□) par rapport à un plan (E), qui est perpendiculaire au panneau de table (10) et dans lequel l'outil (11) est agencé, pour mettre à disposition une force d'application contre une butée (13).

6. Procédé selon la revendication 5, **caractérisé en ce qu'**un sens d'avance (A) et un sens de rotation de l'outil (11) sont opposés.
